# EUROPÄISCHE PATENTSCHRIFT

(11) **EP 3 507 218 B1**
(45) Veröffentlichungstag und Bekanntmachung des Hinweises auf die Patenterteilung: **07.10.2026**
(21) Anmeldenummer: 17758536.1
(22) Anmeldetag: 28.08.2017
(51) Int. Cl.: B65G 43/00, B62D 65/18, G05D 1/00

(54) **VERFAHREN ZUM BETREIBEN EINES FÖRDERSYSTEMS**
METHOD FOR OPERATING A CONVEYOR SYSTEM
PROCÉDÉ DE FONCTIONNEMENT D'UN SYSTÈME DE TRANSPORT

(30) Priorität: 01.09.2016 DE 102016116362
(43) Veröffentlichungstag der Anmeldung: 10.07.2019
(73) Patentinhaber: Eisenmann GmbH, 71032 Böblingen (DE)
(72) Erfinder: ROBBIN, Jörg, 72119 Ammerbuch (DE)
(74) Vertreter: Ostertag & Partner Patentanwälte mbB
(86) Internationale Anmeldenummer: PCT/EP2017/071565
(87) Internationale Veröffentlichungsnummer: WO 2018/041786

(56) Entgegenhaltungen:
- EP-A1- 0 582 348
- EP-A1- 2 231 492
- EP-A1- 2 500 296
- EP-A1- 2 554 499
- WO-A1-02/14133
- JP-A- 2007 200 205
- JP-B2- 3 183 082
- US-A1- 2003 149 509
- US-A1- 2008 035 449
- US-A1- 2010 074 717

## Beschreibung

Die Erfindung betrifft ein Verfahren zum Betreiben eines Fördersystems für Gegenstände, bei welchem eine Fördervorrichtung an einem Betriebsstandort vorhanden ist, die mit einer Mehrzahl von Förderwagen betrieben wird, welche jeweils wenigstens eine Befestigungseinrichtung für zumindest einen Gegenstand aufweisen.

Nachfolgend bezeichnet der Begriff Fördervorrichtung immer eine Fördervorrichtung zum Fördern von Gegenständen. Solche Fördervorrichtungen für Gegenstände können sowohl als bodengebundene Fördervorrichtungen, bei denen die Förderwagen schienengebunden oder freifahrend sein können, oder als Hängebahnsysteme, bei denen die Förderwagen ein Fördergehänge bilden, ausgebildet sein, wie es an und für sich bekannt ist. Bodenschienen oder Schienen für Hängebahnsysteme können dabei einspurig oder zweispurig ausgebildet sein.

Derartige Fördervorrichtungen kommen in allen Bereichen zum Einsatz, in denen Gegenstände gefördert werden müssen. Hierzu zählen Lager und Großlager für fertige Gegenstände bzw. Produkte ebenso wie Produktionsstätten, in denen Gegenstände gefördert werden, die dort bearbeitet und/oder behandelt werden. Letzteres wird nachfolgend am Beispiel der Automobilindustrie erläutert; die Erfindung betrifft jedoch alle Arten von Fördersystemen mit Fördervorrichtungen für Gegenstände.

In der Automobilindustrie werden derartige Fördervorrichtungen beispielsweise in einer Fertigungsanlage zur Herstellung von Fahrzeugen eingesetzt, in welcher Fahrzeugkarosserien oder deren Anbauteile an dem Betriebsstandort durch mehrere Anlagenzonen einer Fertigungsanlage zur Herstellung von Fahrzeugen gefördert werden. Bei den Gegenständen handelt es sich in diesen Fällen also um Fahrzeugkarosserien oder um Anbauteile von Fahrzeugkarosserien, wie Stoßfänger, Seitenspiegel oder dergleichen. Die jeweilige Befestigungseinrichtung der Förderwagen kann so eingerichtet sein, dass sie die Fahrzeugkarosserie unmittelbar aufnehmen kann, ohne dass die Fahrzeugkarosserie auf einem Gegenstandsträger, wie beispielsweise einem an und für sich bekannten Skid, befestigt ist. Alternativ kann die Befestigungseinrichtung der Förderwagen so eingerichtet sein, dass sie einen solchen Gegenstandsträger aufnehmen kann, an dem dann die Fahrzeugkarosserie befestigt ist. Wenn Anbauteile gefördert werden sollen, kann die Befestigungseinrichtung als Gegenstandsträger oder auch als Tragkorb für mehrere solcher Anbauteile konzipiert sein.

Speziell Fahrzeugkarosserien werden, nachdem sie in einer Rohbauanlage aus Einzelteilen zusammengefügt wurden und in einer Korrosionsschutzanlage insbesondere durch eine kataphoretische Tauchlackierung einen Korrosionsschutz erhalten haben, vor dem Erreichen einer Endmontageanlage in einer Oberflächenbehandlungsanlage einer Oberflächenbehandlung unterzogen, welche insgesamt verhältnismäßig viele einzelne Behandlungsschritte umfasst und in der Regel mit dem Trocknen der kataphoretischen Tauchlackierung beginnt. In der Rohbauanlage werden somit Arbeiten an Fahrzeugkarosserie-Vorstufen, nämlich den einzelnen Phasen beim Zusammenfügen der Fahrzeugkarosserie, durchgeführt, während in der Endmontageanlage somit Arbeiten an Fahrzeugkarosserie-Nachstufen, nämlich den einzelnen Phasen beim Montieren von Komponenten und Bauteilen in und an der fertiggestellten Fahrzeugkarosserie, durchgeführt werden. Vorliegend fallen sowohl solche Fahrzeugkarosserie-Vorstufen als auch solche Fahrzeugkarosserie-Nachstufen unter den Begriff Fahrzeugkarosserie. Bezogen auf den Rohbau können also schon das erste Blechteil und alle dazwischenliegenden Aufbaustrukturen bis zur endgültigen Fahrzeugkarosserie als Fahrzeugkarosserie verstanden werden.

Infolgedessen umfasst eine Anlage zur Herstellung für Fahrzeugkarosserien verschiedene Anlagenzonen, die von den Fahrzeugkarosserien in einer bestimmten Abfolge durchlaufen werden müssen und in denen Arbeiten unterschiedlicher Art an den Fahrzeugkarosserien durchgeführt werden. Zu solchen Arbeiten zählen sowohl Maßnahmen, bei denen aktiv auf die Fahrzeugkarosserie eingewirkt wird oder diese verändert oder ergänzt werden, wie beispielsweise beim Zusammenfügen von Einzelteilen im Rohbau oder der Endmontage, bei einer Applikation von Material oder dem Trocknen der Fahrzeugkarosserien, als auch Maßnahmen, bei denen keine aktive Einwirkung auf die Fahrzeugkarosserie erfolgt, wie beispielsweise ein Audit oder ein Abdunsten der Fahrzeugkarosserie. In der Oberflächenbehandlungsanlage werden die Fahrzeugkarosserien im Rahmen solcher Arbeiten in den unterschiedlichen Anlagenzonen auf unterschiedliche Art behandelt.

In allen Arbeitszonen gibt es Arbeitseinrichtungen, mit oder in denen die entsprechenden Arbeiten ausgeführt werden. In der Oberflächenbehandlungsanlage sind solche Arbeitseinrichtungen entsprechend als Behandlungseinrichtungen ausgebildet.

Bei einer Rohbauanlage werden in verschiedene Anlagenzonen zum Beispiel unterschiedliche Arten der Befestigung von Karosserieteilen aneinander ausgeführt.

Bei einer kataphoretischen Tauchbehandlung für den Korrosionsschutz in der Korrosionsschutzanlage kann nur eine Anlagezone vorhanden sein. Es können, abhängig von Techniken, die zum Aufbringen eines Korrosionsschutzes gewählt werden und keine Tauchbehandlung oder keine alleinige Tauchbehandlung sind, aber auch mehrere Zonen vorhanden sein.

Die verschiedenen Anlagenzonen in der Oberflächenbehandlungsanlage können im Wesentlichen in Applikationszonen, Temperierzonen und Funktionszonen unterteilt werden, wobei in den einzelnen Anlagenzonen der Oberflächenbehandlungsanlage ein oder mehrere Behandlungseinrichtungen angeordnet sein können.

In den Applikationszonen werden die Fahrzeugkarosserien mit einer Beschichtung oder einem Material versehen. Zum Beispiel zählen hierzu die Applikation von Füller, Basislack oder Decklack, oder das Aufbringen von Material für den Unterbodenschutz oder von Material zum Nahtabdichten.

In den Temperierzonen werden die Fahrzeugkarosserien temperiert. Unter "Temperieren" einer Fahrzeugkarosserie ist die Herbeiführung einer bestimmten Temperatur der Fahrzeugkarosserie gemeint, die diese zunächst noch nicht besitzt. Es kann sich um eine Temperaturerhöhung oder eine Temperaturverringerung handeln. Auch das Abdunsten einer Fahrzeugkarosserie erfolgt im Rahmen eines "Temperierens".

In den Funktionszonen erfolgen Maßnahmen, welche den Gesamtprozess und den Gesamtablauf unterstützen. Zum Beispiel zählen hierzu die Durchführungen von Audits und gegebenenfalls das Nachbearbeiten von Oberflächenbereichen der Fahrzeugkarosserie, die nicht dem geforderten Qualitätsstandard entsprechen. Eine andere Funktionszone bildet zum Beispiel eine Speicherzone, in dem Fahrzeugkarosserien zwischengelagert und/oder vorgehalten werden können.

Eine Endmontageanlage definiert in der Regel nur eine einzige Anlagenzone; die dortigen Einbau- und Montagemaßnahmen zählen zu Arbeiten einer Art.

Die eingangs genannte Fördervorrichtung, d.h. eine nach demselben Konzept arbeitenden Fördervorrichtung, kann gegebenenfalls nur in einem oder nur in wenigen Anlagenzonen der Fertigungsanlage eingesetzt werden, wenn voneinander verschiedene Arbeits- und Behandlungsarten unterschiedlich konzeptionierte Fördervorrichtungen erfordern. Bekannte solche unterschiedliche Fördervorrichtungen, die in verschiedenen Anlagenzonen und/oder Arbeits- oder Behandlungseinrichtungen verwendet werden, sind neben den oben erwähnten schienengebundenen oder freifahrenden Fördervorrichtungen und Hängebahnsystemen beispielsweise Tragkettenförderer, Rollenbahnen mit oder ohne Querverschiebewagen und Drehtischen, bei denen die Fahrzeugkarosserien ebenfalls zumindest zeitweise auf oben erwähnten Skids befestigt sein können.

Bei einem anderen Ansatz ist vorgesehen, dass die Fahrzeugkarosserien mindestens von einer Korrosionsschutzbehandlung bis zu einer Endmontage in einer Oberflächenbehandlungsanlage zur Oberflächenbehandlung der Fahrzeugkarosserien mit ein und derselben Fördervorrichtung durch die Anlagenzonen der Oberflächenbehandlungsanlage gefördert werden.

Heutzutage besteht der Anspruch, dass die Fertigungsanlagen oder Förderanlagen flexibel an geänderte Prozessabläufe oder Lieferabläufe angepasst oder flexibel auf sich verändernde Betriebsumstände reagieren können. Dies umfasst bei Produktionsanlagen zum Beispiel, dass die Fördervorrichtung in ihrer Streckenführung wandelbar ist, so dass vorhandene Anlagenzonen bei verschiedenen Prozessabläufen in unterschiedlichen Reihenfolgen von den Gegenständen durchlaufen werden können oder zusätzliche Anlagenzonen in den Prozessablauf eingebunden oder bestehende Anlagenzonen aus dem Prozessablauf ausgegliedert werden können. In jedem Fall kann es dabei dazu kommen, dass sich die Anzahl der für den Betrieb der Anlage bzw. der Fördervorrichtung notwendigen Förderwagen ändert. Insbesondere kann sich der mögliche Gesamtdurchsatz der Fertigungsanlage zur Herstellung von Fahrzeugen, und insbesondere der Gesamtdurchsatz der zu dieser Anlage gehörenden Oberflächenbehandlungsanlage, erhöhen oder verringern.

Eine Änderung eines Prozessablaufes kann auch nur in der Erhöhung oder Verringerung des Gesamtdurchsatzes bestehen, ohne dass die Reihenfolge der einzelnen Arbeitsschritte geändert wird.

Eine Änderung des Gesamtdurchsatzes schlägt sich unmittelbar auf die Anzahl der Förderwagen nieder, die zum Betrieb der Fördervorrichtung für einen Prozessablauf zur Verfügung stehen muss.

Erfahrungswerte zeigen, dass die meisten Anlagen heutzutage in 60% ihrer Betriebszeit nur in Teillast gefahren werden. Um jedoch Durchsatzspitzen Rechnung zu tragen, sind die Anlagen und deren Fördervorrichtungen für einen maximalen Durchsatz konzipiert. Dies bedeutet, dass eine entsprechend hohe Anzahl an Förderwagen vorgehalten wird, die dann auch am Betriebsstandort gelagert werden. Dies führt einerseits zu hohen Grundinvestitionskosten für Förderwagen, die in einem Großteil der Betriebszeit der Anlage nicht benötigt werden und stillstehen, und andererseits zu einem besonderen Aufwand, um diese vorgehaltenen Förderwagen am Betriebsstandort unterzubringen und betriebsbereit zu halten. WO2009/083081A1 offenbart ein Verfahren gemäß dem Oberbegriff des Anspruchs 1.

Es ist nun Aufgabe der Erfindung, ein Verfahren der eingangs genannten Art bereitzustellen, durch welches diese Nachteile zumindest verringert werden.

Diese Aufgabe wird durch ein Verfahren gemäß Anspruch 1 gelöst, wobei
a) die Anzahl der an dem Betriebsstandort zum Betrieb der Fördervorrichtung für einen Prozessablauf zur Verfügung stehenden Förderwagen eine Ist-Anzahl definiert; und
b) die Anzahl der an dem Betriebsstandort zum Betrieb der Fördervorrichtung für den Prozessablauf erforderlichen Förderwagen eine Soll-Anzahl definiert; und
c) die Differenz zwischen der Ist-Anzahl und der Soll-Anzahl eine Bedarfszahl definiert, wenn die Ist-Anzahl kleiner ist als die Soll-Anzahl, oder eine Überschusszahl definiert, wenn die Ist-Anzahl größer ist als die Soll-Anzahl; und
d) ein Förderwagen-Pool bereitgestellt wird, der eine Bestands-Anzahl an Förderwagen umfasst, von denen zumindest ein Teil an einem Pool-Standort gelagert wird, der von dem Betriebsstandort der Fördervorrichtung verschieden ist; und
f) eine der Bedarfszahl entsprechende Anzahl Förderwagen aus dem Förderwagen-Pool physisch an den Betriebsstandort überführt wird, wodurch sich die Ist-Anzahl um die Bedarfszahl erhöht und sich die Bestands-Anzahl um die Bedarfszahl verringert; oder
g) eine der Überschusszahl entsprechende Anzahl Förderwagen dem Förderwagen-Pool zugeordnet wird, wodurch sich die Ist-Anzahl um die Überschusszahl verringert und sich die Bestands-Anzahl um die Überschusszahl erhöht.

Erfindungsgemäß wird somit ermittelt, ob die Anzahl der für einen Prozessablauf zur Verfügung stehenden Förderwagen, nämlich der Ist-Anzahl, mit der Anzahl an für den Prozessablauf benötigen Förderwagen, nämlich der Soll-Anzahl, übereinstimmt.

Ein Bedarf an für den Prozessablauf bezogen auf die vorhandenen Förderwagen zusätzlich erforderlichen Förderwagen oder ein Überschuss an für den Prozessablauf nicht mehr benötigtem Förderwagen wird über den Förderwagen-Pool ausgeglichen.

Die Fördervorrichtung umfasst eine Übergabeeinrichtung, mittels welcher Förderwagen aus der Fördervorrichtung herausgenommen oder in die Fördervorrichtung aufgenommen werden können. Das Ausschleusen von überschüssigen Förderwagen aus einer Fördervorrichtung oder das Einschleusen von zusätzlich benötigten Förderwagen in eine Fördervorrichtung kann manuell durch Werker durchgeführt werden oder halb- oder auch vollautomatisch erfolgen.

Damit Ausfälle von Förderwagen, die durch technische Störungen verursacht werden, rasch vor Ort kompensiert werden können, können sowohl die Ist-Anzahl als auch die Soll-Anzahl jeweils eine größere Anzahl an Förderwagen definieren, als für den Betrieb der Fördervorrichtung bei einem vorgegebenen Prozess eigentlich erforderlich ist. Hierdurch sind stets einige Förderwagen als Sicherheitspuffer am Betriebsstandort vorhanden.

Bei einer Änderung des Prozessablaufs und/oder einer Änderung des Gesamtdurchsatzes einer Fördervorrichtung wird die Soll-Anzahl entweder größer oder kleiner, wogegen die Ist-Anzahl zunächst unverändert bleibt, da sich die Zahl der am Betriebsstandort zur Verfügung stehenden Förderwagen nicht ändert. Wenn dann bei Bedarf zusätzliche Förderwagen in die Fördervorrichtung eingegliedert werden oder überschüssige Förderwagen aus der Fördervorrichtung ausgegliedert werden, verändert sich die Ist-Anzahl entsprechend und stimmt hiernach wieder mit der Soll-Anzahl überein.

Wenn ein oder mehrere Förderwagen ausgetauscht werden müssen, ohne dass eine Prozessablauf geändert wird, stehen beispielsweise weniger Förderwagen für den Betrieb der Fördervorrichtung zur Verfügung; dies kann beispielweise notwendig werden, wenn einzelne Förderwagen eine technische Störung haben oder gewartet werden müssen. In diesem Fall verringert sich die Ist-Anzahl, wogegen die Soll-Anzahl unverändert bleibt. Wenn die auszutauschenden Förderwagen aus dem Förderwagen-Pool ersetzt werden, erhöht sich die Ist-Anzahl wieder entsprechend und stimmt nach dem Austausch der Förderwagen wieder mit der Soll-Anzahl überein.

Das Kontingent an Förderwagen des Förderwagen-Pools wird zumindest zum Teil an einem anderen Ort als dem Betriebsstandort gelagert und betriebsfähig gehalten, so dass am Betriebsstandort der Fördervorrichtung hierfür keine entsprechenden Maßnahmen für zeitweise nicht benötigte Förderwagen ergriffen werden müssen.

Insgesamt eröffnet das erfindungsgemäße Verfahren die Möglichkeit, Ressourcen und Investitionskosten zu sparen, was im Weiteren noch deutlicher wird.

Das Verfahren ist besonders effektiv, da erfindungsgemäß
a) die Fördervorrichtung eine erste Fördervorrichtung und deren Betriebsstandort ein erster Betriebsstandort ist;
b) eine zweite Fördervorrichtung an einem zweiten Betriebsstandort vorhanden ist, der von dem ersten Betriebsstandort verschieden ist, wobei auch die zweite Fördervorrichtung mit einer Mehrzahl von Förderwagen betrieben wird und die Förderwagen der ersten und der zweiten Fördervorrichtung zumindest untereinander kompatibel sind;
c) für die erste Fördervorrichtung und die zweite Fördervorrichtung jeweils gesondert eine Ist-Anzahl, eine Soll-Anzahl, eine Bedarfszahl, eine Überschusszahl und eine Bedarfszahl ermittelt wird.

Somit können Förderwagen für die erste Fördervorrichtung und/oder für die zweite Fördervorrichtung aus dem Förderwagen-Pool entnommen oder von der ersten Fördervorrichtung und/oder von der zweiten Fördervorrichtung an den Förderwagen-Pool abgegeben bzw. dem Förderwagen-Pool zugeordnet werden, um auf Veränderungen bei dem Bedarf an Förderwagen an den Betriebsstandorten zu reagieren.

Die Förderwagen der beiden Fördervorrichtungen sind vorzugsweise baugleich; grundsätzlich reicht es jedoch wie angegeben aus, wenn die Förderwagen untereinander kompatibel sind, so dass alle Förderwagen für beide Fördervorrichtungen am ersten und am zweiten Betriebsstandort geeignet sind. Bei schienengebundenen Fördervorrichtungen bedeutet dies in der Regel, dass zumindest die Fahrwerke der Förderwagen, das Schienensystem und die Energie- und Datenübertragung nach demselben Grundkonzept ausgebildet sind und arbeiten. Gegebenenfalls können kleinere Unterschiede in der Bauart von Förderwagen für Fördervorrichtungen an verschiedenen Betriebsstandorten vor Ort angepasst werden. Insbesondere kann dies zum Beispiel die Befestigungseinrichtungen der Förderwagen betreffen, wenn mit verschiedenen Fördervorrichtungen an verschiedenen Betriebsstandorten unterschiedliche Gegenstände gefördert werden sollen. In diesem Fall werden die ungeeigneten Befestigungseinrichtungen von Förderwagen, die aus dem Förderwagen-Pool kommen, am Betriebsstandort oder bereits am Pool-Standort gegen geeignete Befestigungseinrichtungen ausgetauscht.

Da erfindungsgemäß zumindest ein Teil der Förderwagen des Förderwagen-Pools an dem ersten Betriebsstandort und/oder an dem zweiten Betriebsstandort gelagert wird, können Förderwagen, die an einem der beiden Betriebsstandorte nicht benötigt werden, unmittelbar zu dem anderen Betriebsstandort verbracht werden, wenn sich dort ein gegenüber den vorhandenen Förderwagen höherer Bedarf ergibt. In diesem Fall kann also darauf verzichtet werden, dass Förderwagen erst von dem einen Betriebsstandort, bei dem sich eine Überschusszahl ergeben hat, zu dem Pool-Standort und dann von dort zu dem anderen Betriebsstandort transportiert werden. Wenn an dem Betriebsstandort mit erhöhtem Bedarf noch mehr Förderwagen benötigt werden als von dem anderen Betriebsstandort überführt werden können, d.h. wenn die Bedarfszahl an dem einen Betriebsstandort größer ist als die Überschusszahl an dem anderen Betriebsstandort, werden entsprechend weitere Förderwagen von dem Pool-Standort geliefert.

Das Verfahren wird effektiver, wenn
a) eine dritte Fördervorrichtung an einem dritten Betriebsstandort oder noch mehrere weitere Fördervorrichtungen an noch jeweils weiteren Betriebsstandorten vorhanden sind, die jeweils von dem ersten und dem zweiten Betriebsstandort verschieden sind, wobei auch die dritte oder die noch mehreren weiteren Fördervorrichtungen mit einer Mehrzahl von Förderwagen betrieben werden und die Förderwagen aller Fördervorrichtungen zumindest zueinander kompatibel sind;
b) für die dritte oder für jede weitere Fördervorrichtung jeweils gesondert eine Ist-Anzahl, eine Soll-Anzahl, eine Bedarfszahl, eine Überschusszahl und eine Bedarfszahl ermittelt wird.

Dabei können Förderwagen für die vorhandenen Fördervorrichtungen bei Bedarf aus dem Förderwagen-Pool entnommen oder von den vorhandenen Fördervorrichtungen bei einem Überschuss an den Förderwagen-Pool abgegeben werden, um auf Veränderungen bei dem Bedarf an Förderwagen an den Betriebsstandorten zu reagieren.

Wenn ein Förderwagenkontingent von einem Betriebsstandort, an dem sich eine Überschusszahl ergeben hat, abgegeben werden kann, kann auch die räumliche Entfernung zu verschiedenen Betriebsstandorten ermittelt und berücksichtigt werden, bei denen ein Bedarf ein zusätzlichen Förderwagen besteht, um die Transportwege möglichst kurz zu halten.

Im Hinblick auf die Kompatibilität der Förderwagen gilt das oben Gesagte entsprechend.

Vorzugsweise wird dann zumindest ein Teil der Förderwagen des Förderwagen-Pools an einem, mehreren oder allen Betriebsstandorten gelagert, so dass ebenfalls Förderwagen, die an einem Betriebsstandort nicht benötigt werden, unmittelbar zu einem anderen Betriebsstandort transportiert werden können, wenn sich dort ein gegenüber den vorhandenen Förderwagen höherer Bedarf ergibt.

Abhängig von der Zahl der zu dem Fördersystem insgesamt gehörenden Fördervorrichtungen an verschiedenen Betriebsstandorten und der dort jeweils geltenden Ist-Anzahl umfasst das Fördersystem eine System-Gesamtanzahl an Förderwagen, die gleich der Summe der Ist-Anzahlen der einzelnen vorhandenen Fördervorrichtungen und der Bestands-Anzahl des Förderwagen-Pools ist.

Im Extremfall entspricht die System-Gesamtanzahl der Zahl der Förderwagen, die notwendig ist, um alle vorhandenen Fördervorrichtungen zeitgleich mit einem jeweils maximalen Durchsatz zu betreiben, einschließlich der überzähligen Förderwagen, die jeweils als Sicherheitspuffer am Betriebsstandort vorgesehen sind, und gegebenenfalls zuzüglich eines Wartungskontingents an Förderwagen, um nicht einsatzbereite Förderwagen auszugleichen, die einer Wartung oder Reparatur unterzogen werden.

Das hier erläuterte Fördersystem beruht jedoch auch auf der Erkenntnis, dass eine derart große System-Gesamtanzahl an Förderwagen in der Regel nicht notwendig sein wird, um das Fördersystem mit mehreren Fördervorrichtungen an verschiedenen Betriebsstandorten zu betreiben, ohne dass es zu Defiziten an Förderwagen an einem oder mehreren Betriebsstandorten kommt. Folglich kann die System-Gesamtanzahl an Förderwagen kleiner gehalten werden als die Summe der Förderwagen, die bei mehreren Fördervorrichtungen an verschiedenen Betriebsstandorten vorgehalten werden müssten, die nicht unter einem Fördersystem vereinigt sind. Hierdurch können die Investitionskosten für jede einzelne Fördervorrichtung an ihrem jeweiligen Betriebsstandort gesenkt werden.

Bei dem erläuterten Verfahren können die erste Fördervorrichtung oder die erste und die weiteren Fördervorrichtungen von ein und demselben Betreiber betrieben werden, welcher auch die Verwaltung des Förderwagen-Pools und den Transport der Förderwagen zwischen den vorhandenen Betriebsstandorten und dem Pool-Standort übernimmt.

Die Bereitstellung und Koordination des Transportwagen-Pools kann gegebenenfalls durch eine unabhängige bzw. übergeordnete Stelle erfolgen, welche von dem Betreiber der Fördervorrichtungen unabhängig ist.

Auch können verschiedene Fördervorrichtungen an unterschiedlichen Betriebsstandorten von zwei oder mehr unterschiedlichen Betreibern betrieben werden, wobei dennoch alle Fördervorrichtungen in das Fördersystem eingebunden und mit dem Förderwagen-Pool verknüpft sind.

Der Transport von Förderwagen zwischen Betriebsstandorten und/oder dem Pool-Standort kann mit etablierten Versandkonzepten als Stückgut erfolgen. Hierbei können Transporthilfsmittel verwendet werden; beispielsweise können die Förderwagen, gegebenenfalls in einer Transportkiste, auf Euro-Paletten verladen und mit entsprechend hierfür ausgelegten Transportmitteln transportiert werden. Hierzu kommen beispielsweise auch LKW-Transporte durch Speditionen in Frage. Alternativ können auch spezielle, an die Förderwagen angepasste Transportcontainer verwendet werden, in welche die Förderwagen einfahren und aus welchen die Förderwagen wieder herausfahren können. Im Falle von eingangs erwähnten schienengebundenen Förderwagen kann ein solcher Transportcontainer beispielsweise ein entsprechendes Schienenstück mit sich führen, auf welches ein oder mehrere Förderwagen auffahren können.

Auch können sogenannte Wechselbrücken bereitgestellt werden. Bei einer Wechselbrücke handelt es sich um einen Spezialtrailer für den Transport von mehreren Förderwagen. Derartige Wechselbrücken können auch vorteilhaft für die Aufnahme von Förderwagen verwendet werden, die gewartet werden müssen und daher aus der Ist-Anzahl einer Fördervorrichtung ausgegliedert werden.

Unter Berücksichtigung des oben erwähnten Sicherheitspuffers bezogen auf die Ist-Anzahl der Transportwagen am Betriebsstandort kann ein Austausch von solchen zu wartenden Transportwagen beispielsweise erst dann erfolgen, wenn eine bestimmte Stückzahl erreicht ist.

Das Fördersystem umfasst vorzugsweise eine zentrale Steuereinrichtung, welche die Ist-Anzahl und die Soll-Anzahl für eine bestimmte Fördervorrichtung an deren Betriebsstandort empfängt oder abruft und daraus die Bedarfszahl bzw. Überschusszahl berechnet. Alternativ kann eine sich ergebende Bedarfszahl oder Überschusszahl für eine Fördervorrichtung auch direkt an die zentrale Steuereinrichtung übermittelt werden. Die zentrale Steuereinrichtung verarbeitet die Daten und initiiert je nach Situation, dass Förderwagen zu einer Fördervorrichtung transportiert werden und hierzu von einer anderen Fördervorrichtung oder dem Pool-Standort abgeholt werden, oder dass Förderwagen lediglich von einer Fördervorrichtung abgeholt und zu dem Pool-Standort transportiert werden. Gegebenenfalls erhält die zentrale Steuereinrichtung von einer Fördervorrichtung, bei der ein Überschuss an Förderwagen entstanden ist, zusätzlich eine Information, dass die nun dem Förderwagen-Pool zuzuordnenden Förderwagen am Betriebsstandort verbleiben können. Die Steuereinrichtung berechnet durch Algorithmen, die auf das Fördersystem unter Berücksichtigung der Daten aller Betriebsstandorte und des Förderwagen-Pools abgestimmt sind, die Verteilung von Förderwagen zwischen den einzelnen Betriebsstandorten und dem Pool-Standort.

Die Übermittlung der Daten an die zentrale Steuereinrichtung kann manuell oder automatisch erfolgen. In letzterem Fall soll eine Übermittlung der Daten dann automatisch an die zentrale Steuereinrichtung erfolgen, wenn eine am Betriebsstandort einer betreffenden Fördervorrichtung vorhandene Steuervorrichtung eine Änderung der Ist-Anzahl oder der Soll-Anzahl registriert, aus denen sich ein geänderter Bedarf an Förderwagen ergibt.

Im Hinblick auf die Fördervorrichtungen kann das erläuterte Verfahren besonders effektiv genutzt werden, wenn eine oder mehrere Fördervorrichtungen verwendet werden, deren Förderwagen auf einem Schienensystem verfahrbar sind, wobei jeder Förderwagen ein Förderwagen-Fahrwerk umfasst, welches mittels einer Verbindungseinrichtung mit der Befestigungseinrichtung gekoppelt ist. In diesem Fall handelt es sich also um schienengebundene Fördervorrichtungen, die als Boden- oder Hängebahn konzipiert sein können. Durch die Verbindungseinrichtung kann ein Austausch der Befestigungseinrichtung verhältnismäßig unkompliziert erfolgen, wenn dies notwendig ist.

Es ist außerdem günstig, wenn ein oder mehrere Fördervorrichtungen verwendet werden, bei denen das Förderwagen-Fahrwerk eines Förderwagens eine in einer Förderrichtung vorauseilende Vorläufereinheit und eine in Förderrichtung nacheilende Nachläufereinheit umfasst. Wenn die Vorläufereinheit und die Nachläufereinheit gelenkig gekoppelt sind, können beispielsweise kurvengängige Förderwagen bereitgestellt werden, die den heutigen Anforderungen an flexible Streckenführungen Rechnung tragen.

Besonders vorteilhaft werden ein oder mehrere Fördervorrichtungen verwendet, deren Förderwagen jeweils ein eigenes Antriebssystem mit sich führen, so dass die Förderwagen unabhängig voneinander antreibbar und verfahrbar sind.

Vorzugsweise werden dabei ein oder mehrere Fördervorrichtungen verwendet, bei denen das Antriebssystem eines Förderwagens wenigstens eine Antriebsrolle umfasst, die von dem Förderwagen-Fahrwerk gelagert und auf einer Antriebslauffläche des Schienensystems abrollbar ist, und wenigstens einen Antriebsmotor für die wenigstens eine Antriebsrolle umfasst, welcher von dem Transportwagen-Fahrwerk mitgeführt wird. Derartige Förderwagen können gut aus einer Fördervorrichtung ausgegliedert oder in eine Fördervorrichtung integriert werden.

Es ist besonders günstig, wenn ein oder mehrere Fördervorrichtungen verwendet werden, bei denen wenigstens einer der Förderwagen eine autarke Energieversorgungseinrichtung mit sich führt, mittels welcher der wenigstens eine Antriebsmotor des Transportwagens mit Energie versorgbar ist. In diesem Fall müssen keine Kompatibilitätsanforderungen an die Energieversorgung entlang der Förderstrecke bei mehreren Fördervorrichtungen des Fördersystems erfüllt werden, wie es beispielsweise bei an und für sich bekannten Schleifleitungen der Fall wäre.

Die Förderwagen, die dem Förderwagen-Pool zugeordnet sind, können in Lagereinrichtungen untergebracht sein. Hierzu kommen beispielsweise Lagerhallen mit oder ohne Regalkonzept in Frage. Alternativ können die Lagereinrichtungen jedoch analog zu den Fördereinrichtungen ausgebildet sein, so dass die Förderwagen in der Lagereinrichtung verfahren werden können und keine gesonderten Transporteinheiten für eine Bewegung der Förderwagen in der Lagereinrichtung notwendig sind. An einem Betriebsstandort einer Fördervorrichtung kann eine Lagereinrichtung beispielsweise auch durch einen Pufferabschnitt der Fördervorrichtung ausgebildet sein, in den die Förderwagen einfahren und aus dem die Förderwagen wieder herausfahren können.

## Patentansprüche

1. Verfahren zum Betreiben eines Fördersystems für Gegenstände in Form von Fahrzeugkarosserien oder deren Anbauteilen, bei welchem eine Fördervorrichtung an einem Betriebsstandort vorhanden ist, an dem die Gegenstände durch mehrere Anlagenzonen einer Fertigungsanlage zur Herstellung von Fahrzeugen gefördert werden, wobei die Fördervorrichtung mit einer Mehrzahl von Förderwagen betrieben wird, welche jeweils wenigstens eine Befestigungseinrichtung für zumindest einen Gegenstand aufweisen,
**dadurch gekennzeichnet, dass**
a) die Anzahl der an dem Betriebsstandort zum Betrieb der Fördervorrichtung für einen Prozessablauf zur Verfügung stehenden Förderwagen eine Ist-Anzahl definiert; und
b) die Anzahl der an dem Betriebsstandort zum Betrieb der Fördervorrichtung für den Prozessablauf erforderlichen Förderwagen eine Soll-Anzahl definiert; und
c) die Differenz zwischen der Ist-Anzahl und der Soll-Anzahl eine Bedarfszahl definiert, wenn die Ist-Anzahl kleiner ist als die Soll-Anzahl, oder eine Überschusszahl definiert, wenn die Ist-Anzahl größer ist als die Soll-Anzahl; und
d) ein Förderwagen-Pool bereitgestellt wird, der eine Bestands-Anzahl an Förderwagen umfasst, von denen zumindest ein Teil an einem Pool-Standort gelagert wird, der von dem Betriebsstandort der Fördervorrichtung verschieden ist; und
e) eine der Bedarfszahl entsprechende Anzahl Förderwagen aus dem Förderwagen-Pool physisch an den Betriebsstandort überführt wird, wodurch sich die Ist-Anzahl um die Bedarfszahl erhöht und sich die Bestands-Anzahl um die Bedarfszahl verringert; oder
f) eine der Überschusszahl entsprechende Anzahl Förderwagen dem Förderwagen-Pool zugeordnet wird, wodurch sich die Ist-Anzahl um die Überschusszahl verringert und sich die Bestands-Anzahl um die Überschusszahl erhöht;
wobei
g) die Fördervorrichtung eine erste Fördervorrichtung und deren Betriebsstandort ein erster Betriebsstandort ist;
h) eine zweite Fördervorrichtung an einem zweiten Betriebsstandort vorhanden ist, der von dem ersten Betriebsstandort verschieden ist, wobei auch die zweite Fördervorrichtung mit einer Mehrzahl von Förderwagen betrieben wird und die Förderwagen der ersten und der zweiten Fördervorrichtung zumindest zueinander kompatibel sind;
i) für die erste Fördervorrichtung und die zweite Fördervorrichtung jeweils gesondert eine Ist-Anzahl, eine Soll-Anzahl, eine Bedarfszahl und eine Überschusszahl ermittelt wird;
und wobei
j) zumindest ein Teil der Förderwagen des Förderwagen-Pools an dem ersten Betriebsstandort und/oder an dem zweiten Betriebsstandort gelagert wird.

2. Verfahren nach Anspruch 1, **dadurch gekennzeichnet, dass**
a) eine dritte Fördervorrichtung an einem dritten Betriebsstandort oder noch mehrere weitere Fördervorrichtungen an noch jeweils weiteren Betriebsstandorten vorhanden sind, die jeweils von dem ersten und dem zweiten Betriebsstandort verschieden sind, wobei auch die dritte oder die noch mehreren weiteren Fördervorrichtungen mit einer Mehrzahl von Förderwagen betrieben werden und die Förderwagen aller Fördervorrichtungen zumindest zueinander kompatibel sind;
b) für die dritte oder für jede weitere Fördervorrichtung jeweils gesondert eine Ist-Anzahl, eine Soll-Anzahl, eine Bedarfszahl und eine Überschusszahl ermittelt wird.

3. Verfahren nach Anspruch 2, **dadurch gekennzeichnet, dass** zumindest ein Teil der Förderwagen des Förderwagen-Pools an einem, mehreren oder allen Betriebsstandorten gelagert wird.

4. Verfahren nach einem der Ansprüche 1 bis 3, **dadurch gekennzeichnet, dass** eine oder mehrere Fördervorrichtungen verwendet werden, deren Förderwagen auf einem Schienensystem verfahrbar sind, wobei jeder Förderwagen ein Förderwagen-Fahrwerk umfasst, welches mittels einer Verbindungseinrichtung mit der Befestigungseinrichtung gekoppelt ist.

5. Verfahren nach Anspruch 4, **dadurch gekennzeichnet, dass** ein oder mehrere Fördervorrichtungen verwendet werden, bei denen das Förderwagen-Fahrwerk eines Förderwagens eine in einer Förderrichtung vorauseilende Vorläufereinheit und eine in Förderrichtung nacheilende Nachläufereinheit umfasst.

6. Verfahren nach Anspruch 5, **dadurch gekennzeichnet, dass** ein oder mehrere Fördervorrichtungen verwendet werden, deren Förderwagen jeweils ein eigenes Antriebssystem mit sich führen, so dass die Förderwagen unabhängig voneinander antreibbar und verfahrbar sind.

7. Verfahren nach Anspruch 6, **dadurch gekennzeichnet, dass** ein oder mehrere Fördervorrichtungen verwendet werden, bei denen das Antriebssystem eines Förderwagens wenigstens eine Antriebsrolle umfasst, die von dem Förderwagen-Fahrwerk gelagert und auf einer Antriebslauffläche des Schienensystems abrollbar ist, und wenigstens einen Antriebsmotor für die wenigstens eine Antriebsrolle umfasst, welcher von dem Transportwagen-Fahrwerk mitgeführt wird.

8. Verfahren nach Anspruch 7, **dadurch gekennzeichnet, dass** ein oder mehrere Fördervorrichtungen verwendet werden, bei denen wenigstens einer der Förderwagen eine autarke Energieversorgungseinrichtung mit sich führt, mittels welcher der wenigstens eine Antriebsmotor des Transportwagens mit Energie versorgbar ist.

## Claims

1. A method for operating a conveyor system for objects in the form of vehicle bodies or the attachments thereof, in which a conveyor facility is present at an operating site at which the objects are conveyed through several plant zones of a manufacturing plant for producing vehicles, said conveyor facility being operated with a plurality of conveyor carts which each exhibit at least one fastening device for at least one object,
**characterized in that**
a) the number of conveyor carts available at the operating site for operating the conveyor facility for a process sequence defines an actual number; and
b) the number of conveyor carts required at the operating site for operating the conveyor facility for the process sequence defines a desired number; and
c) the difference between the actual number and the desired number defines a demand number if the actual number is less than the desired number, or defines a surplus number if the actual number is greater than the desired number; and
d) a conveyor-cart pool is provided which comprises a stock number of conveyor carts, at least some of which are stored at a pool site which is different from the operating site of the conveyor facility; and
e) a number of conveyor carts corresponding to the demand number are physically transferred from the conveyor-cart pool to the operating site, as a result of which the actual number increases by the demand number, and the stock number decreases by the demand number; or
f) a number of conveyor carts corresponding to the surplus number are assigned to the conveyor-cart pool, as a result of which the actual number decreases by the surplus number, and the stock number increases by the surplus number;
wherein
g) the conveyor facility is a first conveyor facility, and the operating site thereof is a first operating site;
h) a second conveyor facility is present at a second operating site which is different from the first operating site, the second conveyor facility also being operated with a plurality of conveyor carts, and the conveyor carts of the first and of the second conveyor facility being at least compatible with one another;
i) for the first conveyor facility and the second conveyor facility an actual number, a desired number, a demand number, and a surplus number are ascertained separately in each instance;
and wherein
j) at least some of the conveyor carts of the conveyor-cart pool are stored at the first operating site and/or at the second operating site.

2. The method as claimed in claim 1, **characterized in that**
a) a third conveyor facility is present at a third operating site or yet more further conveyor facilities are present at respectively yet further operating sites, which in each instance are different from the first and the second operating site, the third or the yet more further conveyor facilities also being operated with a plurality of conveyor carts, and the conveyor carts of all the conveyor facilities being at least compatible with one another;
b) for the third or for each further conveyor facility an actual number, a desired number, a demand number, and a surplus number are ascertained separately in each instance.

3. The method as claimed in claim 2, **characterized in that** at least some of the conveyor carts of the conveyor-cart pool are stored at one operating site, at several operating sites or at all operating sites.

4. The method as claimed in one of claims 1 to 3, **characterized in that** use is made of one or more conveyor facilities, the conveyor carts of which are capable of being displaced on a rail system, each conveyor cart including a conveyor-cart chassis which is coupled with the fastening device by means of a connecting device.

5. The method as claimed in claim 4, **characterized in that** use is made of one or more conveyor facilities in which the conveyor-cart chassis of a conveyor cart includes a forerunner unit preceding in a conveying direction and a trailer unit succeeding in the conveying direction.

6. The method as claimed in claim 5, **characterized in that** use is made of one or more conveyor facilities, the conveyor carts of which each carry their own drive system, so that the conveyor carts are capable of being propelled and displaced independently of one another.

7. The method as claimed in claim 6, **characterized in that** use is made of one or more conveyor facilities in which the drive system of a conveyor cart includes at least one drive roller, which is supported by the conveyor-cart chassis and capable of rolling on a propelling running surface of the rail system, and includes at least one drive motor for the at least one drive roller, which is carried along by the transportation-cart chassis.

8. The method as claimed in claim 7, **characterized in that** use is made of one or more conveyor facilities in which at least one of the conveyor carts carries a self-sufficient energy-supply device, by means of which the at least one drive motor of the transportation cart is capable of being supplied with energy.

## Revendications

1. Procédé d'exploitation d'un système de transport pour des objets sous forme de carrosseries de véhicule ou de leurs pièces de montage, lors duquel un dispositif de transport est présent sur un site d'exploitation sur lequel les objets sont transportés à travers plusieurs zones d'usine d'une usine pour la fabrication de véhicules, dans lequel le dispositif de transport est exploité avec une pluralité de wagons de transport qui présentent chacun au moins une installation de fixation pour au moins un objet,
**caractérisé en ce que**
a) le nombre des wagons de transport à disposition sur le site d'exploitation pour l'exploitation du dispositif de transport pour une séquence de processus définit un nombre réel ; et
b) le nombre des wagons de transport nécessaires sur le site d'exploitation pour l'exploitation du dispositif de transport pour la séquence de processus définit un nombre de consigne ; et
c) la différence entre le nombre réel et le nombre de consigne définit un nombre adapté aux besoins, lorsque le nombre réel est inférieur au nombre de consigne, ou définit un nombre d'excédent, lorsque le nombre réel est supérieur au nombre de consigne ; et
d) un groupe de wagons de transport est mis à disposition, lequel comprend un nombre du stock de wagons de transport parmi lesquels au moins une partie est stockée sur un site de groupe qui est différent du site d'exploitation du dispositif de transport ; et
e) un nombre de wagons de transport correspondant au nombre adapté aux besoins parmi le groupe de wagons de transport est transmis physiquement au site d'exploitation, moyennant quoi le nombre réel augmente du nombre adapté aux besoins et le nombre du stock réduit du nombre adapté aux besoins ; ou
f) un nombre de wagons de transport correspondant au nombre d'excédent est associé au groupe de wagons de transport, moyennant quoi le nombre réel réduit du nombre d'excédent et le nombre du stock augmente du nombre d'excédent ;
dans lequel
g) le dispositif de transport est un premier dispositif de transport et son site d'exploitation est un premier site d'exploitation ;
h) un deuxième dispositif de transport est présent sur un deuxième site d'exploitation, qui est différent du premier site d'exploitation, dans lequel le deuxième dispositif de transport est également exploité avec une pluralité de wagons de transport et les wagons de transport du premier et du deuxième dispositif de transport sont compatibles au moins l'un par rapport à l'autre ;
i) pour le premier dispositif de transport et le deuxième dispositif de transport, un nombre réel, un nombre de consigne, un nombre adapté aux besoins et un nombre d'excédent sont à chaque fois déterminés de manière séparée ;
et dans lequel
j) au moins une partie des wagons de transport du groupe de wagons de transport est stockée sur le premier site d'exploitation et/ou sur le second site d'exploitation.

2. Procédé selon la revendication 1, **caractérisé en ce que**
a) un troisième dispositif de transport est présent sur un troisième site d'exploitation ou encore plusieurs autres dispositifs de transport sont présents sur encore d'autres sites d'exploitation respectifs qui sont chacun différents du premier et du deuxième site d'exploitation, dans lequel le troisième ou les encore plusieurs autres dispositifs de transport sont également exploités avec une pluralité de wagons de transport et les wagons de transport de tous les dispositifs de transport sont compatibles au moins l'un par rapport à l'autre ;
b) pour le troisième ou pour chaque autre dispositif de transport, un nombre réel, un nombre de consigne, un nombre adapté aux besoins et un nombre d'excédent sont à chaque fois déterminés de manière séparée.

3. Procédé selon la revendication 2, **caractérisé en ce qu'**au moins une partie de wagons de transport du groupe de wagons de transport est stockée sur un, plusieurs ou tous les sites d'exploitation.

4. Procédé selon une des revendications 1 à 3, **caractérisé en ce qu'**un ou plusieurs dispositifs de transport sont utilisés, dont les wagons de transport peuvent être déplacés sur un système de rails, dans lequel chaque wagon de transport comprend un mécanisme de roulement de wagon de transport qui est attelé à l'installation de fixation au moyen d'une installation de connexion.

5. Procédé selon la revendication 4, **caractérisé en ce qu'**un ou plusieurs dispositifs de transport sont utilisés, pour lesquels le mécanisme de roulement d'un wagon de transport comprend une unité précurseur en avance dans une direction de transport et une unité suiveuse en retard dans la direction de transport.

6. Procédé selon la revendication 5, **caractérisé en ce qu'**un ou plusieurs dispositifs de transport sont utilisés dont les wagons de transport entraînent à chaque fois un système d'entraînement propre de sorte que les wagons de transport peuvent être entraînés et déplacés indépendamment l'un de l'autre.

7. Procédé selon la revendication 6, **caractérisé en ce qu'**un ou plusieurs dispositifs de transport sont utilisés, pour lesquels le système d'entraînement d'un wagon de transport comprend au moins un galet d'entraînement qui est logé par le mécanisme de roulement de wagon de transport et peut être déroulé sur une surface de roulement d'entraînement du système de rails, et comprend au moins un moteur d'entraînement pour l'au moins un galet d'entraînement qui est entraîné par le mécanisme de roulement de wagon de transport.

8. Procédé selon la revendication 7, **caractérisé en ce qu'**un ou plusieurs dispositifs de transport sont utilisés, pour lesquels au moins un des wagons de transport entraîne une installation d'alimentation en énergie autarcique au moyen de laquelle l'au moins un moteur d'entraînement du wagon de transport peut être alimenté en énergie.
